# EUROPÄISCHE PATENTSCHRIFT

(11) **EP 1 297 265 B1**
(45) Veröffentlichungstag und Bekanntmachung des Hinweises auf die Patenterteilung: **05.10.2005**
(21) Anmeldenummer: 01947419.6
(22) Anmeldetag: 28.06.2001
(51) Int. Cl.: F16B 5/02

(54) **VORRICHTUNG ZUR BEFESTIGUNG EINES ERSTEN BAUTEILES IN EINER ABSTANDSLAGE ZU EINEM ZWEITEN BAUTEIL**
DEVICE FOR FIXING A FIRST COMPONENT AT A DISTANCE FROM A SECOND COMPONENT
DISPOSITIF POUR FIXER UN PREMIER ELEMENT EN POSITION D'ESPACEMENT PAR RAPPORT A UN DEUXIEME ELEMENT

(30) Priorität: 04.07.2000 DE 10032318
(43) Veröffentlichungstag der Anmeldung: 02.04.2003
(73) Patentinhaber: Witte-Velbert GmbH & Co. KG, 42551 Velbert (DE)
(72) Erfinder: KLÜTING, Bernd, 42477 Radevormwald (DE); KUSTOS, Siegmund, 40595 Düsseldorf (DE)
(74) Vertreter: Grundmann, Dirk
(86) Internationale Anmeldenummer: PCT/EP2001/007390
(87) Internationale Veröffentlichungsnummer: WO 2002/002954

(56) Entgegenhaltungen:
- DE-A- 3 932 193
- DE-A- 4 224 575
- US-A- 1 835 243

## Beschreibung

Die Erfindung betrifft eine Vorrichtung zur Befestigung eines ersten Bauteiles in einer Abstandslage zu einem zweiten Bauteil, mit einem Befestigungsstück, welches an dem zweiten Bauteil befestigbar ist, mit einer Verbindungsschraube und mit einem Distanzstück, welches dem Befestigungsstück zugeordnet ist, und sich beim Eindrehen der Verbindungsschraube von einer Entferntstellung zum ersten Bauteil in eine Anlagestellung dazu verlagert.

Eine derartige Vorrichtung wird von der EP 0 176 663 in verschiedene Varianten beschrieben. Auch die DE 36 20 005 zeigt eine derartige Vorrichtung. Varianten zeigen ferner die DE 42 24 575, DE 44 12 431 und DE 196 43 407.

Die DE 39 32193 A1 beschreibt eine Befestigungseinrichtung für einen auf einem Fahrzeugdach angeordneten Gepäckträger. In einem Dachrahmen des Fahrzeugdaches soll eine Gewindeaufnahmebuchse mit einem Links-Innengewinde drehfest eingesetzt werden. In diese soll eine Gewindeeinstellbuchse mit einem Linksaußengewinde und einem Rechtsinnengewinde eingeschraubt werden. Dabei hat die Gewindeeinstellbuchse an einem Anlageflansch einen Schrägschlitz, über den sie bei Durchsetzung einer Durchgangsbohrung in der Dachaußenhaut in die Gewindeaufnahmebuchse einschraubbar ist. Durch eine schließlich in das Innengewinde der Gewindeeinstellbuchse eingeschraubte Schraube wird ein Stützfuß einer Reling auf der Dachaußenhaut befestigt. Auch mit dieser Vorrichtung können zwei in einer Abstandslage zueinander liegende Bauteile miteinander befestigt werden.

Der Erfindung liegt die Aufgabe zugrunde, die Vorrichtung derart weiterzubilden, dass sie durch eine Öffnung eines den Abstand definierenden dritten Bauteiles hindurch steckbar ist.

Gelöst wird die Aufgabe durch die in den Ansprüchen angegebene Erfindung, wobei der Anspruch 1 auf ein dem Distanzstück zugeordnetes Anschlagelement, welches zum Durchstecken der Vorrichtung durch eine Öffnung eines des Abstandsmaßbestimmenden dritten Bauteiles eine radial eimärts verlagerte Position, und zum die Verlagerung des Distanzstückes hemmenden Anschlagen an das dritte Bauteil eine radial auswärts abragende Position einnimmt, abstellt. Eine Weiterbildung der Erfindung sieht vor, dass das Anschlagelement ein oder mehrere schräg abstehende Zungen ausbildet, deren feste Enden in axialer Beabstandung zur Anschlagebene am Distanzstück festliegen und deren freie Enden elastisch rückstellbar vom Distanzstück abstehen. Die Zungen können zufolge ihrer Elastizität radial einwärts ausweichen, um in dieser Ausweichstellung durch eine Öffnung des dritten Bauteiles hindurchgesteckt werden zu können, an dessen Rückseite sie sich dann abstützen können. Ferner kann vorgesehen sein, dass die Zungen sich mit ihren festen Enden, die bevorzugt einem Ring zugeordnet sind, gegen eine Stufe des Distanzstückes abstützen. Auch kann vorgesehen sein, dass das Anschlagelement axial verstellbar dem Distanzstück zugeordnet ist. Dann kann das Distanzstück für dritte Bauteile unterschiedlicher Stärke verwendet werden. Das Anschlagelement kann dann vorzugsweise reibschlüssig am Distanzstück gefesselt sein. Es ist von Vorteil, wenn der vom freien Ende des Anschlagelementes gebildete Anschlag einen axialen Abstand von der freien Stirn des Distanzstückes besitzt, der der Stärke des dritten Bauteiles entspricht. Dann kann die Anschlagstirn des Distanzstükkes fest gegen das erste Bauteil treten, ohne dass es zu einer Spannung im dritten Bauteil kommt, welches von dem Distanzstück durchdrungen ist. Ferner kann vorgesehen sein, dass das Befestigungsstück einen Gewindezapfen ausbildet und ein koaxial dazu liegendes Innengewinde als Gegengewinde für die Verbindungsschraube. Die Vorrichtung ist dann in einfacher Weise mit dem zweiten Bauteil dadurch verbindbar, dass der Gewindezapfen in eine entsprechende Gewindebohrung eingeschraubt wird. Bevorzugt besitzt das Distanzstück ein zum Drehsinn des Gewindes der Verbindungsschraube gegenläufiges Gewinde und ist damit mit dem Befestigungsstück verbunden. Das Distanzstück bildet bevorzugt eine durchmesservergrößerte Bohrung aus, in welcher ein Federelement in Form eines Ringes einliegt. Dieses Federelement tritt in reibschlüssige Anlage an den Gewindeschaft der Verbindungsschraube, wenn diese in das Distanzstück hinein gesteckt wird. Die Gewindeschraube kann durch das Federelement hindurch gesteckt werden, bis deren Gewindegänge in die Gewindegänge des Gegengewindes eingreifen. Beim Einschrauben der Gewindeschraube in das Gegengewinde wird das Distanzstück drehmitgenommen. Zufolge der Gegenläufigkeit des Verbindungsgewindes zwischen Distanzstück und Befestigungsstück spindelt sich das Distanzstück beim Eindrehen der Verbindungsschraube in eine Abstandstellung, bis die Anschlagelemente in Berührung treten zum dritten Bauteil. In dieser Stellung fluchtet die Stirn des Distanzstückes mit der Außenoberfläche des dritten Bauteiles, so dass durch weiteres Eindrehen der Befestigungsschraube das zweite Bauteil gegen die dann fixierte Stirn des Distanzstückes schraubbar ist. Zufolge dieser Ausgestaltung wird das Abstandsmaß zwischen ersten und zweiten Bauteil von der Position des dritten Bauteiles bestimmt, so dass das erste Bauteil beim Eindrehen der Verbindungsschraube sogar von dieser auf das zweite Bauteil in die durch das dritte Bauteil fixierte Abstandslage mit geschleppt werden kann. In einer bevorzugten Weiterbildung der Erfindung besitzt das Befestigungsstück an seinem dem Gewindezapfen gegenüberliegendem, vom Distanzstück überfangenem Ende ein Schraubwerkzeugangriffsprofil. Mit diesem Schraubwerkzeugangriffsprofil ist es möglich, die Vorrichtung vorzumontieren. Bevorzugt besitzt das Federelement Aussparungen an den Stellen, wo das Schraubwerkzeugangriffsprofil von außen zugänglich ist, zum Durchtritt des Schraubwerkzeuges. Das Federelement kann von einer Drahtformfeder ausgebildet sein. Diese kann die Aussparungen ausbilden. Die Aussparung werden bevorzugt durch Ausbiegungen ausgebildet. Diese bilden dann Vorsprünge aus, die in Nischen des Distanzstückes einliegen können, damit das Federelement drehfest mit dem Distanzstück verbunden ist. Das Anschlagelement kann auch andere Ausgestaltungen besitzen, bspw. kann es zwei oder mehr um eine Gelenkstelle schwenkbare Schenkel aufweisen. Die Schenkel können von einer Feder in ihre Wirkstellung bringbar sein. Diese Feder kann die Schenkel in einer Anlagestellung an dem Distanzstück halten, so dass es mit angelegten Schenkeln durch die Öffnung des dritten Bauteiles hindurchpasst. Es ist insbesondere vorgesehen, dass die Schenkel in ihre radial auswärts ragende Wirkstellung schwenken, wenn die Verbindungsschraube in das Distanzstück eingesteckt wird. Hierzu kann ein Auslöser vorgesehen sein. Die Schenkel können um eine parallel zur Drehachse des Distanzstükkes verlaufende Schwenkachse schwenken. Sie können aber auch um eine quer zur Drehachse verlaufenden Achse schwenkbar sein. In einer Variante kann vorgesehen sein, dass das Anschlagelement ein quer zur Drehachse des Distanzstückes verschiebbarer Schieber ist. Dieser wird beim Einstecken der Verbindungsschraube verlagert. Beim Durchstecken der Vorrichtung durch die Öffnung des dritten Bauteiles liegt der Schieber in einer einwärts verlagerten Position. Die Umrisskontur des Schiebers kann dabei der Umrisskontur des Distanzstückes entsprechen. Der Schieber kann eine exzentrische Öffnung aufweisen. Eine Wandung der Öffnung kann eine Schrägfläche ausbilden. Wird die Verbindungsschraube eingesteckt, so trifft ihre Stirnseite auf diese Schrägfläche auf und verlagert den Schieber, so dass eine Stützzone des Schiebers radial abragt. In einer Weiterbildung der Erfindung besteht das Anschlagelement aus einem Federring. Dieser Federring kann eine schräge Auflaufflanke besitzen, die beim Einstekken der Vorrichtung durch die Öffnung des dritten Bauteiles auf der Öffnungswandung aufläuft, um so den Federring zusammenzudrücken, wobei er in eine Nut des Distanzstückes radial einwärts ausweichen kann.

Ausführungsbeispiele der Erfindung werden nachfolgend anhand beigefügter Zeichnungen erläutert. Es zeigen:
- Fig. 1: eine erfindungsgemäße Vorrichtung vor der Montage,
- Fig. 2: eine erfindungsgemäße Vorrichtung im befestigten Zustand,
- Fig. 3: eine Variante der erfindungsgemäßen Vorrichtung in einer vormontierten Stellung vor dem Einstecken der Verbindungsschraube,
- Fig. 4: ein weiteres Ausführungsbeispiel der Erfindung, bei welchem das Anschlagelement axial verschieblich auf dem Distanzstück sitzt,
- Fig. 5: ein weiteres Ausführungsbeispiel der Erfindung in der vormontierten Stellung,
- Fig. 6: das Ausführungsbeispiel gemäß Fig. 5 beim Durchschieben durch die Öffnung des dritten Bauteiles,
- Fig. 7: ein Federelement in der Draufsicht,
- Fig. 8: ein Federelement gemäß dem Schnitt VIII-VIII in Fig. 7,
- Fig. 9: ein Federelement in Form einer gebogenen Feder,
- Fig. 10: einen Querschnitt durch das Federelement,
- Fig. 11: das Federelement in ungespreizter und durch Einstecken des Gewindezapfens gespreizter Stellung,
- Fig. 12: ein Anwendungsbeispiel,
- Fig. 13: eine teilgeschnittene Darstellung einer Variante eines Distanzstückes,
- Fig. 14: die stirnseitige Draufsicht auf dieses Distanzstück,
- Fig. 15: eine Schnittdarstellung eines weiteren Ausführungsbeispieles eines Distanzstückes,
- Fig. 16: die Draufsicht auf das Ausführungsbeispiel gemäß Fig. 15,
- Fig. 17: eine Schnittdarstellung eines weiteren Ausführungsbeispiels eines Distanzstückes,
- Fig. 18: die Draufsicht auf das Ausführungsbeispiel gemäß Fig. 17,
- Fig. 19: eine Schnittdarstellung eines weiteren Ausführungsbeispiels eines Distanzstückes und
- Fig. 20: die Draufsicht auf das Ausführungsbeispiel gemäß Fig. 19.

Das Befestigungsstück 1 ist aus Metall gefertigt und bildet einen Gewindezapfen 10 aus. Axial beabstandet von dem Gewindezapfen 10 und einem an diesen angrenzenden Anschlagbund bildet das Befestigungsstück 1 ein Gegengewinde 11 aus. Gegengewinde 11 und Gewindezapfen 10 liegen fluchtend hintereinander. Das als Innengewinde gestaltete Gegengewinde 11 ist in eine Topfbohrung eingeschnitten. Die Topfwandung bildet außenseitig ein Außengewinde 12 aus, welches zum Innengewinde gegenläufig ist. Auf dieses Außengewinde ist ein Distanzstück 3 aufgeschraubt. Das Distanzstück 3 hat ebenfalls die Form einer Hülse. Die Stirnseite des das Gegengewinde 11 ausbildenden Abschnitts des Befestigungsstückes 1 besitzt einen Einschnitt, der als Schraubwerkzeugangriffsprofil dient.

Das Distanzstück 3 bildet an seinem die Stirnseite mit dem Schraubwerkzeugangriffsprofil 15 überfangenen Abschnitt eine Bohrung 13 aus, die durchmessergrößer ist, als das Außengewinde 12. In dieser Bohrung 13 sitzt ein Federelement 14, welches verschiedene Ausgestaltungen haben kann. Dieses Federelement 14 ist drehfest in der Bohrung 13 angeordnet. Hierzu kann das Federelement 14 Vorsprünge 19 ausbilden. Diese Vorsprünge 19 können einem aus Kunststoff gefertigten Federring 14 angeformt sein, welcher nach Innen weisende Nasen 18 ausbildet zur reibschlüssigen Anlage an den Gewindeschaft 2'' der Schraube 2. Das Federelement 14 kann aber auch als Biegeformfeder gestaltet sein, die zwei Schenkel aufweist. Die Biegeformfeder besitzt bevorzugt Aussparungen 16, die den Schlitzen des Schraubwerkzeugangriffsprofils 15 zugeordnet sind, so dass das Schraubwerkzeug durch die Aussparungen 16 hindurch gesteckt werden kann. Die Aussparungen 16 bilden dann Fortsätze aus, die in Nischen des Distanzstückes eintreten zur drehfesten Lagerung des Federelementes 14 im Distanzstück 3.

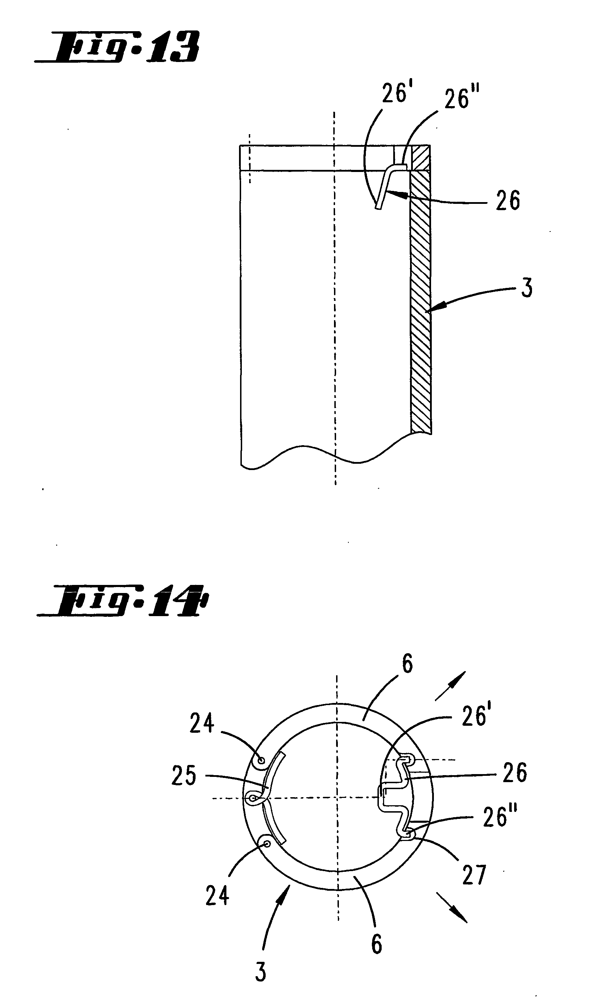

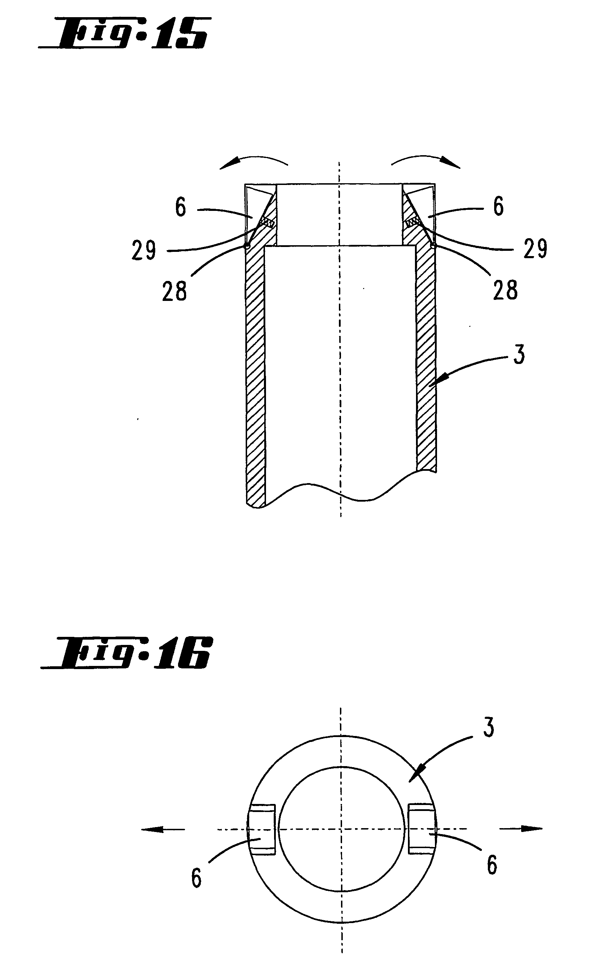

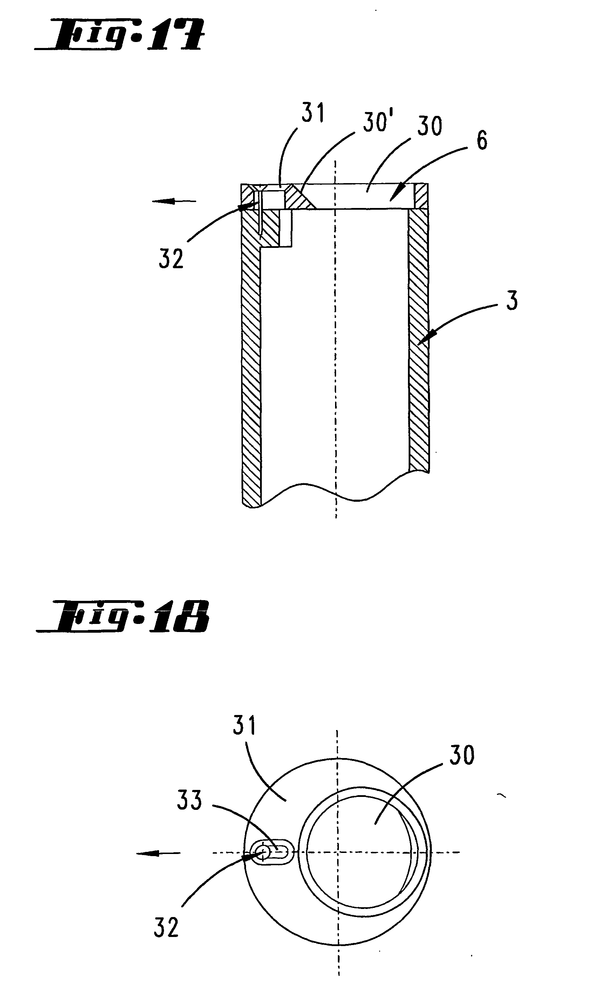

Das in der Fig. 7 dargestellte Kunststoff-Federelement 14 besitzt einen Fortsatz 17. Dieser Fortsatz ragt im Auslieferungszustand der Vorrichtung in den Schlitz 15 des Schraubwerkzeugangriffsprofils ein, so dass das Distanzstück 3 drehfest mit dem Befestigungsstück verbunden ist. Beim erstmaligen Drehen des Distanzstückes zufolge Drehmitnahme durch die in das Gewinde 11 eingeschraubte Schraube wird der Fortsatz 17 abgebrochen.

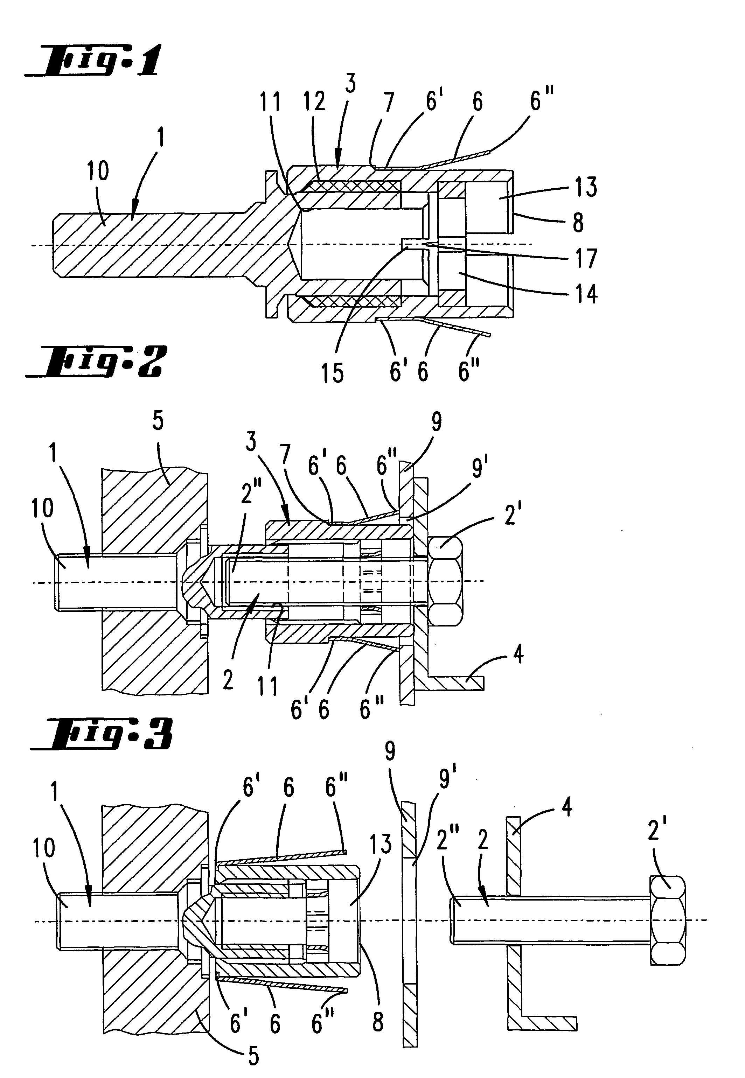

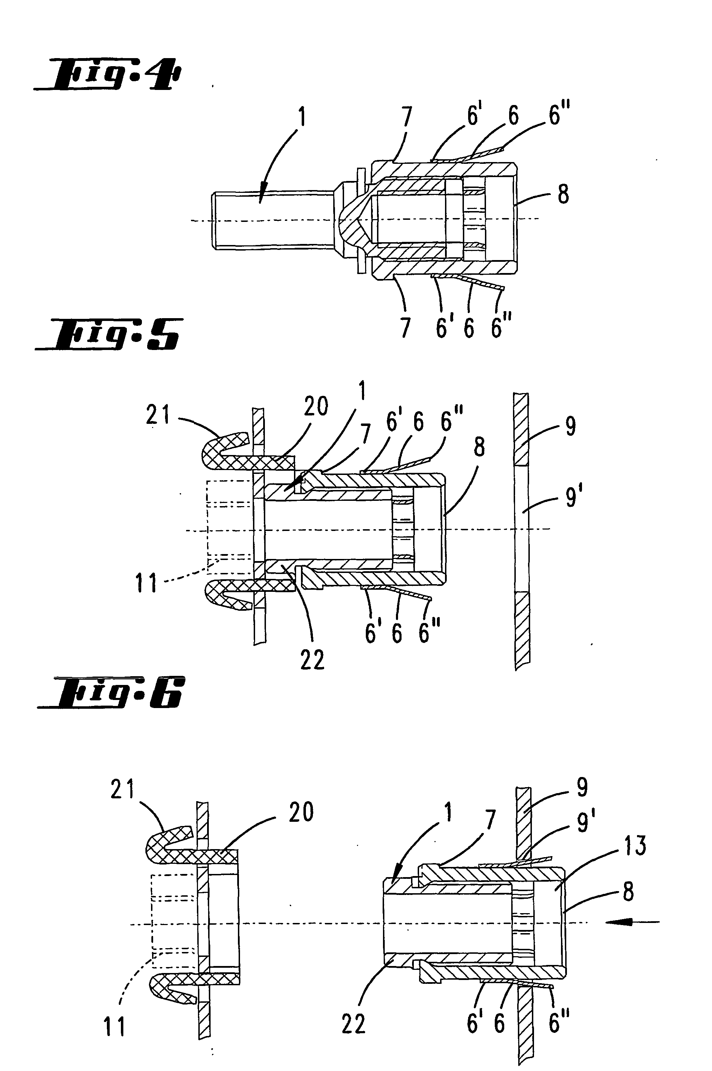

Dem Distanzstück 3 ist ein Anschlagelement 6 zugeordnet. Im ersten Ausführungsbeispiel (Fig. 1 und 2) stützt sich das feste Ende des Anschlagelementes 6 gegen eine Stufe 7 des Distanzstückes 3 ab. Die Stufe 7 ist als Ringstufe ausgebildet und befindet sich auf der Zylinderaußenmantelwand des Distanzstückes 3. Das Anschlagelement 6 kann als ringförmiger Körper ausgebildet sein mit radial abstehenden Zungen, die schräg zur Mantelfläche verlaufen, so dass das freie Ende 6'' der Zunge radial von der Zylindermantelwand des Distanzstükkes 3 absteht, aber bis an die Zylindermantelwand gedrückt werden kann, so dass die gesamte Vorrichtung durch eine Öffnung 9' eines dritten Bauelementes hindurchsteckbar ist, deren Radius geringer ist, als der axiale Abstand der radial unbelasteten freien Enden 6'' vom Zentrum des Distanzstückes 3.

Bei der in Fig. 2 dargestellten Variante erstrecken sich die Zungen des Anschlagelementes 6 über nahezu die gesamte Länge des Distanzstückes 3. Das freie Ende 6'' des Anschlagelementes 6 ist von der Stirn 8 des Distanzstückes 3 um die Stärke des dritten Bauteiles 9 beabstandet, so dass die Stirn 8 mit der Außenoberfläche des dritten Bauteiles fluchtet, wenn die freien Enden 6'' in eine Anschlagstellung zum dritten Bauteil 9 getreten sind.

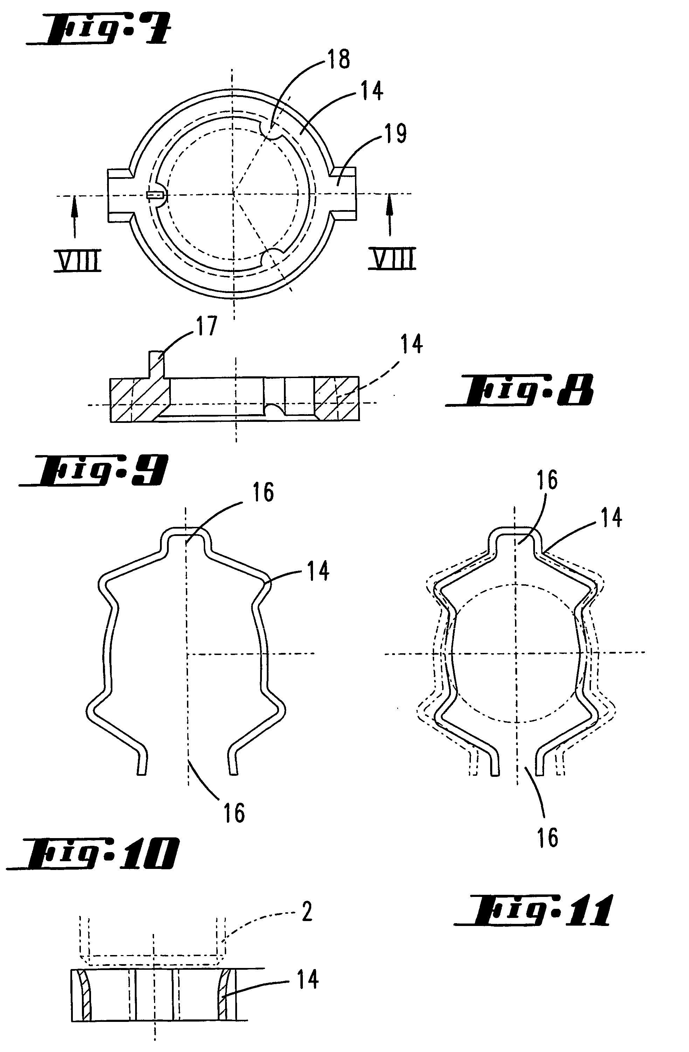

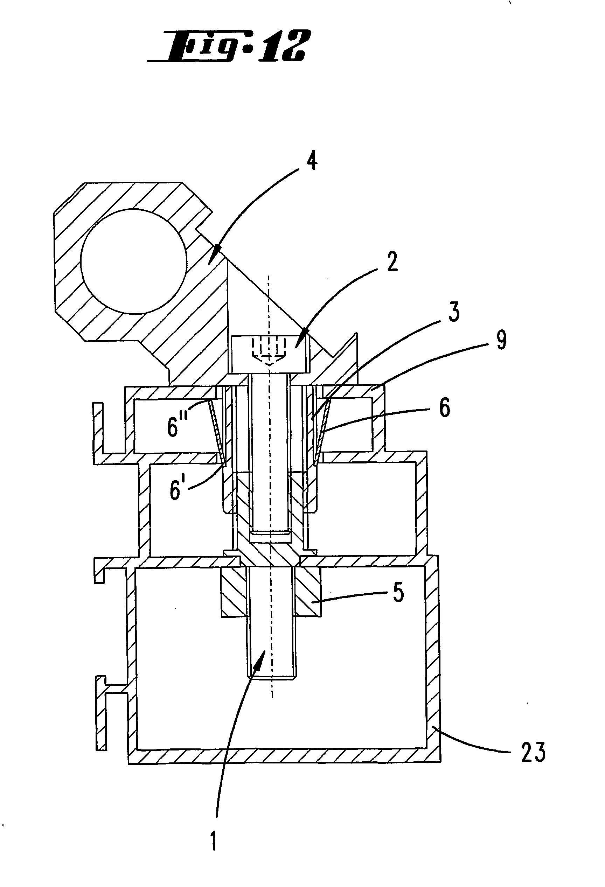

Bei dem in den Fig. 4 und 5 dargestellten Ausführungsbeispiel ist das Anschlagelement 6 ebenfalls ringförmig gestaltet und sitzt mit einem Kragen, der dem festen Ende 6' der Zungen zugeordnet ist reibschlüssig gefesselt auf der Mantelfläche des Distanzstückes 3. Durch Verschieben des Anschlagelementes 6 in Achsrichtung auf dem Distanzstück kann die Abstandsstellung des freien Endes 6'' zur Stirn 8 eingestellt werden.

Bei dem in den Fig. 5 und 6 dargestellten Ausführungsbeispiel ist ein Halteteil 20 vorgesehen, welches das Gegengewinde 11 ausbildet und hält und welches mit Haken 21 am zweiten Bauteil 5 befestigbar ist. In eine Öffnung des Halteteiles 20 kann das Befestigungsstück 1 mit einem gezahnten Kragen eingesteckt werden. Beim Durchstecken der Vorrichtung durch die Öffnung 9' des dritten Bauteiles 9 legen sich die Anschlagelement 6 in der in Fig. 6 dargestellten Weise an die Mantelwand des Distanzstückes 3 an.

Die Fig. 12 beschreibt einen bevorzugten Anwendungsfall für das erfindungsgemäße Verbindungselement. Mit der Bezugsziffer 23 ist ein Türrahmen bezeichnet, der von einem Aluminiumkastenprofil ausgebildet wird. In diesem Aluminiumkastenprofil befindet sich ein Gewindeträger, welcher das zweite Bauteil 5 ausbildet. Das dritte Bauteil 9 wird von einer Außenwandung des Kastenprofiles ausgebildet, auf welche das erste Bauteil aufzuschrauben ist. Bei dem ersten Bauteil 4 handelt es sich um ein Türscharnier. Dieses Türscharnier soll fest mit dem im Innern des Profils angeordneten zweiten Bauteiles 5 verbunden sein, ohne dass eine Zug- oder Druckbelastung auf die Außenoberfläche 9 des Profiles aufgebracht wird.

### Die Funktionsweise der Vorrichtung ist die Folgende:

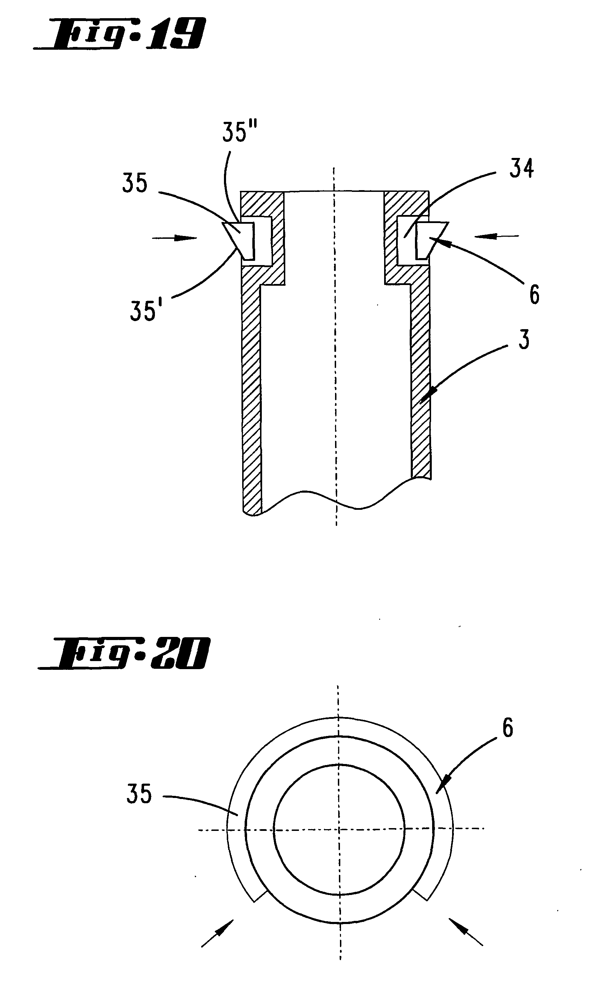

Die Vorrichtung, wie sie beispielsweise in der Fig. 1 dargestellt ist, wird mit vollständig auf das Gewinde 12 aufgeschraubtem Distanzstück 3 unter Benutzung eines Schraubwerkzeuges mit dem Gewindezapfen 10 in ein Einschraubgewinde eines zweiten Bauteiles 5 eingeschraubt. Bei diesem zweiten Bauteil 5 handelt es sich bevorzugt um einen Gewindeträger, der in einem Hohlraum eines Rahmenprofiles einliegt. Der Gewindeträger 5 wird dabei gleichzeitig mit einer Profilzwischenwand verschraubt. Sodann wird das erste Bauteil 4, bei dem es sich um ein Scharnierteil handeln kann, mittels einer Verbindungsschraube 2 mit dem Befestigungsstück 1 verbunden. Hierzu wird die Verbindungsschraube 2 durch das Federelement 14 hindurch gesteckt. Die in Fig. 9 bis 11 dargestellte Biegefeder spreizt sich dabei auf, so dass ihre trichterförmig gestalteten, nach innen weisenden Breitflächen in reibende Anlage treten zum Gewindeabschnitt 2'' der Verbindungsschraube 2. Die Verbindungsschraube 2 wird soweit eingesteckt, bis ihre Gewindegänge in das Innengewinde 11 eintreten. Dann wird durch Angriff eines Schraubwerkzeuges am Schraubenkopf 2' die Schraube 2 gedreht. Das erste Bauteil 4 muss in dieser Stellung nicht unbedingt eine definierte Abstandslage zum zweiten Bauteil besitzen. Durch Drehen der Verbindungsschraube 2 wird das Distanzstück 3 drehmitgeschleppt und verlagert sich in eine Entferntlage zum zweiten Bauteil 5, bis die freien Enden 6'' gegen das abstandsfixiert dritte Bauteil 9 stoßen. Nach Einnahme der Abstandslage dreht sich das Distanzstück nicht weiter. Die Verbindungsschraube kann jetzt weiter angezogen werden, wobei das erste Bauteil bis in Anlage an das dritte Bauteil mitgeschleppt werden kann. Die Befestigung ist abgeschlossen, wenn das erste Bauteil 4 gegen die Stirnfläche 8 des die Öffnung 9' durchragenden Stirnabschnitt des Distanzstückes 3 tritt.

Die Figuren 13 bis 20 zeigen weitere Ausführungsbeispiele für das Anschlagelement 6.

Bei dem in den Fig. 13 und 14 dargestellten Ausführungsbeispiel besteht das Anschlagelement 6 aus zwei Schenkeln, die in der Montagestellung von einer Auslösefeder 26 in einer radialen Einwärtslage gehalten sind. Diese beiden bogenförmigen Schenkel 6 können um eine Gelenkstelle 24 geschwenkt werden. Im Bereich der beiden Gelenkstellen 24 befindet sich eine Schenkelfeder 25, welche von innen gegen die bogenförmigen Schenkel wirkt, so dass die Schenkel 6 beim Auslösen der Auslösefeder 26 im Sinne einer Freigabe radial auswärts schwenken können, um sich am dritten Bauteil 9 abstützen zu können. Die Auslösefeder 26 besitzt hierzu einen in die Schraubeneinstecköffnung hineinragenden Auslöseabschnitt 26. Mit ihren beiden Enden 26' liegt die Auslösefeder 26 in Aussparungen 27 der Schenkel 6 ein. Wird der Auslöseabschnitt 26' von der Stirnfläche der Verbindungsschraube 2 beaufschlagt, so lösen sich die Enden 26'' aus den Aussparungen 27, so dass die Schenkel 6 ausschwenken können.

Bei dem in den Fig. 15 und 16 dargestellten Ausführungsbeispiel sind zwei keilförmige Schenkel 6 vorgesehen, die von der Kraft einer Druckfeder 29 um jeweils eine Achse 28 ausschwenken können. Die Achse 28 liegt quer zur Drehachse des Distanzstückes 3. Diese beiden Schenkel 6 brauchen nicht mit einem Auslöseglied in einer Montagestellung gehalten zu werden. Sie können beim Einstecken der Vorrichtung durch die Öffnung des dritten Bauteiles radial einwärts ausweichen. Dies erfolgt ähnlich der zuvor beschriebenen Zungen.

Bei dem in den Fig. 17 und 18 dargestellten Ausführungsbeispiel besteht das Anschlagelement 6 aus einer kreisförmigen Scheibe, die eine exzentrische Öffnung 30 ausbildet. Demzufolge bildet die Scheibe eine sichelförmige Stützzone 31 aus. Die Scheibe ist in einer Richtung quer zur Drehachse des Distanzstückes 3 verlagerbar. Die Umrisskontur der Scheibe entspricht der Umrisskontur des Distanzstückes 3. Der Rand 30' der Öffnung 30 besitzt eine Schräge. Diese Schräge 30' befindet sich in der Bewegungsbahn der Verbindungsschraube 2. Wird die Verbindungsschraube 2 eingesteckt, so beaufschlagt sie diese schräge Flanke 30'. Dabei wird die Stützzone 31 radial nach außen verlagert. Dies ist möglich, da die Scheibe mittels eines Stiftes 32 am Distanzstück 3 befestigt ist und der Stift ein Langloch 33 der Scheibe durchgreift.

Das in den Fig. 19 und 20 dargestellte Ausführungsbeispiel sieht als Anschlagelement 6 eine in einer Ringnut 34 des Distanzstückes 3 einliegende Feder in Form eines Ringes vor. Dieser Federring 35 besitzt eine schräge Flanke 35', welche beim Einstecken der Vorrichtung durch die Öffnung des dritten Bauteiles 9 auf den Öffnungsrand aufgleiten kann. Dabei drückt sich der Federring 35 zusammen, so dass er durch die Öffnung passt. Wenn er durch die Öffnung hindurchgetreten ist, tritt der Federring 35 wieder teilweise aus der Ringnut 34 aus, so dass die Stützflanke 35'' radial auswärts ragt.

## Patentansprüche

1. Vorrichtung zur Befestigung eines ersten Bauteiles (4) in einer Abstandslage zu einem zweiten Bauteil (5) mit einem Befestigungsstück (1),welches an dem zweiten Bauteil (5) festlegbar ist, mit einer Verbindungsschraube (2) und einem Distanzstück (3), welches dem Befestigungsstück (1) zugeordnet ist und sich beim Eindrehen der Verbindungsschraube (2) von einer Entfemtstellung zum ersten Bauteil (4) in eine Anlagestellung dazu verlagert, **gekennzeichnet durch** ein dem Distanzstück (3) zugeordnetes Anschlagelement, welches zum Durchstecken der Vorrichtung **durch** eine Öffnung (9') eines das Abstandsmaß bestimmenden dritten Bauteiles (9) eine radial einwärts verlagerte Position und zum die Verlagerung des Distanzstückes (3) hemmenden Anschlagen an das dritte Bauteil (9) eine radial auswärts abragende Position einnimmt.

2. Vorrichtung nach Anspruch 1, **dadurch gekennzeichnet, dass** das Anschlagelement (6) ein oder mehrere schräg abstehende, radial einwärts ausweichbare Zungen ausbildet, deren feste Enden (6') in axialer Beabstandung zur Anschlagebene am Distanzstück (3) festliegen und deren freie Enden (6") elastisch rückstellbar am Distanzstück (3) abragen.

3. Vorrichtung nach Anspruch 2, **dadurch gekennzeichnet, dass** die Zungen (6) sich mit ihren festen Enden (6'), die bevorzugt einem Ring zugeordnet sind, gegen eine Stufe (7) des Distanzstücks (3) abstützen.

4. Vorrichtung nach Anspruch 1, **dadurch gekennzeichnet, dass** das Anschlagelement (6) axial verstellbar dem Distanzstück (3) zugeordnet ist.

5. Vorrichtung nach einem der vorhergehenden Ansprüche, **dadurch gekennzeichnet, dass** das Anschlagelement (6) reibschlüssig am Distanzstück (3) gefesselt ist.

6. Vorrichtung nach einem der vorhergehenden Ansprüche, **dadurch gekennzeichnet, dass** ein am dritten Bauteil (9) anschlaggebender Anschlag (6") des Anschlagelementes (6) einen axialen Abstand von einer freien Stirn (8) des Distanzstückes (3) besitzt.

7. Vorrichtung nach einem der vorhergehenden Ansprüche, **dadurch gekennzeichnet, dass** das Befestigungsstück (1) einen Gewindezapfen (10) ausbildet und ein koaxial dazu liegendes Gegengewinde (11) für die Verbindungsschraube (2) ausbildet.

8. Vorrichtung nach einem der vorhergehenden Ansprüche, **dadurch gekennzeichnet, dass** das Distanzstück mit einem zur Verbindungsschraube (2) gegenläufigen Gewinde (12) mit dem Befestigungsstück (1) verbunden ist und das Distanzstück (3) in einer durchmesservergrößerten Bohrung (13) ein Federelement (14) in Form eines Ringes oder einer Haarnadel aufweist zur reibschlüssigen Drehmitnahme durch die Verbindungsschraube (2).

9. Vorrichtung nach Anspruch 8, **dadurch gekennzeichnet, dass** das Befestigungsstück (1) an seinem dem Gewindezapfen (10) gegenüberliegenden, vom Distanzstück (3) überfangenen Ende ein Schraubwerkzeugangriffsprofil (15) ausbildet und das Federelement (14) Aussparungen zum Durchtritt des Schraubwerkzeuges ausbildet.

10. Vorrichtung nach einem der Ansprüche 8 oder 9, **dadurch gekennzeichnet, dass** das Federelement (14) eine Drahtformfeder ist, die mit einem in einer Nische des Distanzstückes (3) einliegenden Abschnitt eine Aussparung (16) ausbildet.

11. Vorrichtung nach Anspruch 1, **dadurch gekennzeichnet, dass** das Anschlagelement (6) zwei oder mehr um eine Gelenkstelle (24, 28) schwenkbare Schenkel (6) ausbildet.

12. Vorrichtung nach Anspruch 11, **dadurch gekennzeichnet, dass** die Schenkel von einer Feder (25, 29) in ihre Wirkstellung, d.h. radial auswärts, bringbar sind.

13. Vorrichtung nach einem der Ansprüche 11 oder 12, **dadurch gekennzeichnet, dass** die Schenkel um eine zur Drehachse des Distanzstückes (3) parallele Achse oder um eine quer dazu verlaufende Achse schwenkbar sind.

14. Vorrichtung nach Anspruch 12 oder nach den Ansprüchen 12 und 13, **dadurch gekennzeichnet, dass** die federvorgespannten Schenkel von einem beim Einstecken der Verbindungsschraube (2) auslösbaren Auslöser (26) zum Ausschwenken freigebbar sind.

15. Vorrichtung nach Anspruch 1, **dadurch gekennzeichnet, dass** das Anschlagelement (6) ein Schieber ist, der beim Einstecken der Verbindungsschraube (2) in eine exzentrische Öffnung (30) des Schiebers verlagerbar ist.

16. Vorrichtung nach Anspruch 1, **dadurch gekennzeichnet, dass** das Anschlagelement (6) ein Federring (35) ist mit einer schrägen Auflaufflanke (35').

## Claims

1. Device for fixing a first component (4) at a spaced location with respect to a second component (5), having a fixing piece (1) which can be secured on the second component (5), having a connecting screw (2) and a spacer (3) which is associated with the fixing piece (1) and, upon screwing in of the connecting screw (2), is displaced from a position remote from the first component (4) into an engagement position with it, **characterized by** a stop element which is associated with the spacer (3) and, in order to insert the device through an opening (9') in a third component (9) determining the extent of the distance, takes up a radially inwardly displaced position and, for abutment against the third component (9), inhibiting the displacement of the spacer (3), takes up a radially outwardly protruding position.

2. A device according to Claim 1, **characterized in that** the stop element (6) forms one or more obliquely protruding, radially inwardly deflectable tongues, the fixed ends (6') of which are fixed on the spacer (3) at an axial spacing from the abutment plane and the free ends (6'') of which protrude from the spacer (3) in an elastically resettable manner.

3. A device according to Claim 2, **characterized in that** the tongues (6) are supported at their fixed ends (6'), which are preferably associated with a ring, against a step (7) of the spacer (3).

4. A device according to Claim 1, **characterized in that** the stop element (6) is associated with the spacer (3) in an axially displaceable manner.

5. A device according to one of the preceding claims, **characterized in that** the stop element (6) is gripped on the spacer (3) with frictional engagement.

6. A device according to one of the preceding claims, **characterized in that** a stop (6'') of the stop element (6) that provides the abutment against the third component (9) is at an axial spacing from a free end (8) of the spacer (3).

7. A device according to one of the preceding claims, **characterized in that** the fixing piece (1) forms a threaded pin (10) and forms a mating thread (11), which is located coaxially therewith, for the connecting screw (2).

8. A device according to one of the preceding claims, **characterized in that** the spacer is connected to the fixing piece (1) by a thread (12) running in the opposite direction to the connecting screw (2), and the spacer (3) has, in a diameter-enlarged hole (13), a spring element (14) in the form of a ring or a hairpin for carrying along in rotation, with frictional engagement, by the connecting screw (2).

9. A device according to Claim 8, **characterized in that** the fixing piece (1) forms a screwing-tool engagement profile (15) at its end which is located opposite the threaded pin (10) and is engaged over by the spacer (3), and the spring element (14) forms recesses for the passage of the screwing tool.

10. A device according to either of Claims 8 and 9, **characterized in that** the spring element (14) is a wire spring which forms a recess (16) with a section which is located in a niche of the spacer (3).

11. A device according to Claim 1, **characterized in that** the stop element (6) has two or more limbs (6) which can be pivoted about a pivot point (24, 28).

12. A device according to Claim 11, **characterized in that** the limbs can be brought into their operative position, i.e. radially outwards, by a spring (25, 29).

13. A device according to either of Claims 11 and 12, **characterized in that** the limbs can be pivoted about an axis parallel to the axis of rotation of the spacer (3) or about an axis running transversely thereto.

14. A device according to Claim 12 or according to Claims 12 and 13, **characterized in that** the spring-prestressed limbs can be released for pivoting out by a triggering means (26) which can be triggered upon insertion of the connecting screw (2).

15. A device according to Claim 1, **characterized in that** the stop element (6) is a slide which can be displaced upon insertion of the connecting screw (2) into an eccentric opening (30) in the slide.

16. A device according to Claim 1, **characterized in that** the stop element (6) is a spring ring (35) with an oblique run-on flank (35').

## Revendications

1. Dispositif pour fixer un premier élément (4) en une position d'espacement par rapport à un deuxième élément (5), avec une pièce de fixation (1) susceptible d'être fixée sur le deuxième élément (5), avec une vis de liaison (2) et une pièce d'espacement (3), qui est associée à la pièce de fixation (1) et qui, lors du vissage de la vis de liaison (2) depuis une position d'éloignement par rapport au premier élément (4), vient se placer en une position d'appui, **caractérisé par** un élément de butée, associé à la pièce d'espacement (3), qui, pour traverser le dispositif, en passant à travers une ouverture (9') d'un troisième élément (9) déterminant la cote d'espacement, prend une position déplacée radialement vers l'intérieur et, pour la mise en butée, entravant le déplacement de la pièce d'espacement (3), sur le troisième élément (9), prend une position radialement en saillie extérieure.

2. Dispositif selon la revendication 1, **caractérisé en ce que** l'élément de butée (6) constitue une ou plusieurs languette(s) faisant saillie obliquement, susceptible(s) de s'échapper radialement vers l'intérieur, dont des extrémités (6') rigides, sont fixées en espacement axial par rapport au plan de butée sur la pièce d'espacement (3), et dont les extrémités libres (6") font saillie élastiquement de façon rétractable sur la pièce d'espacement (3).

3. Dispositif selon la revendication 2, **caractérisé en ce que** les languettes (6) prennent appui, par leurs extrémités (6') fixes, associées de préférence à une bague, contre un étagement (7) de la pièce d'espacement (3).

4. Dispositif selon la revendication 1, **caractérisé en ce que** l'élément de butée (6) est associé de façon réglable axialement à la pièce d'espacement (3).

5. Dispositif selon l'une des revendications précédentes, **caractérisé en ce que** l'élément de butée (6) est maintenu en contention sur la pièce d'espacement (3) par une liaison à friction.

6. Dispositif selon l'une des revendications précédentes, **caractérisé en ce qu'**une butée (6"), assurant une fonction de butée sur le troisième élément (9), de l'élément de butée (6) présente un espacement axial par rapport à une face frontale (8) libre de la pièce d'espacement (3).

7. Dispositif selon l'une des revendications précédentes, **caractérisé en ce que** la pièce de fixation (1) forme un tourillon fileté (10) et forme, pour la vis de liaison (2), un filetage conjugué (11) coaxial à celui-ci.

8. Dispositif selon l'une des revendications précédentes, **caractérisé en ce que** la pièce d'espacement est reliée à la pièce de fixation (1), à l'aide d'un filetage (12) présentant un pas inverse par rapport à celui de la vis de liaison (2), et la pièce d'espacement (3) comporte dans un perçage (13) de plus grand diamètre,, un élément élastique (14) réalisé sous la forme d'un anneau ou d'une épingle à cheveux, pour assurer l'entraînement en rotation, par une liaison par friction, au moyen de la vis de liaison (2).

9. Dispositif selon la revendication 1, **caractérisé en ce que** la pièce de fixation (1) forme, sur son extrémité, opposée au tourillon fileté (10), entourée et emprisonnée par la pièce d'espacement (3), un profil (15) d'engagement d'outil de vissage, et l'élément élastique (14) forme des évidements, pour permettre le passage de l'outil de vissage.

10. Dispositif selon l'une des revendications 8 ou 9, **caractérisé en ce que** l'élément élastique (14) est un ressort en fil façonné formant, avec un tronçon, introduit dans une niche de la pièce d'espacement (3), un évidement (16).

11. Dispositif selon la revendication 1, **caractérisé en ce que** l'élément de butée (6) forme deux branches (6) ou plus, susceptibles de pivoter autour d'un point d'articulation (24, 28).

12. Dispositif selon la revendication 11, **caractérisé en ce que** les branches sont susceptibles d'être placées à leur position fonctionnelle, c'est-à-dire radialement vers l'extérieur, par un ressort (25, 29).

13. Dispositif selon l'une des revendications 11 ou 12, **caractérisé en ce que** les branches sont susceptibles de pivoter, autour d'un axe parallèle à l'axe de rotation de la pièce d'espacement (3), ou autour d'un axe transversal à celui-ci.

14. Dispositif selon la revendication 12 ou les revendications 12 et 13,
**caractérisé en ce que** les branches, précontraintes élastiquement, sont susceptibles d'être dégagées pour permettre un pivotement, par un déclencheur (26) susceptible d'être déclenché lors de l'enfichage de la vis de liaison (2).

15. Dispositif selon la revendication 1, **caractérisé en ce que** l'élément de butée (6) est un coulisseau qui, lors de l'enfichage de la vis de liaison (2), est déplaçable dans une ouverture excentrique (30) de ce coulisseau.

16. Dispositif selon la revendication 1, **caractérisé en ce que** l'élément de butée (6) est une bague élastique (35) munie d'un flanc de rampe (35') oblique.
